(19) Europäisches Patentamt
European Patent Office
Office européen des brevets

(11) **EP 2 554 443 B1**

(12) **FASCICULE DE BREVET EUROPEEN**

(45) Date de publication et mention
de la délivrance du brevet:
**26.02.2014 Bulletin 2014/09**

(21) Numéro de dépôt: **12178755.0**

(22) Date de dépôt: **31.07.2012**

(51) Int Cl.:
*B60T 8/17* (2006.01)    *B60T 8/172* (2006.01)
*B64C 25/42* (2006.01)    *G05D 1/00* (2006.01)
*G08G 5/06* (2006.01)

(54) **Dispositif et procédé de détermination d'un état de piste, aéronef comprenant un tel dispositif et système d'aide au pilotage exploitant cet état de piste**

Vorrichtung und Verfahren zum Bestimmen des Zustands einer Landebahn, Flugzeug mit einer solchen Vorrichtung und Hilfssteuersystem verwendend diesen Landebahnzustand

Device and method for determining the condition of a runway, aircraft comprising such device and auxiliary control system using this runway condition

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.08.2011 FR 1157041**

(43) Date de publication de la demande:
**06.02.2013 Bulletin 2013/06**

(73) Titulaire: **Airbus Opérations SAS**
**31060 Toulouse (FR)**

(72) Inventeur: **Jones, Logan**
**31300 Toulouse (FR)**

(74) Mandataire: **Sarraméa, Claude**
**Airbus Operations ETRT - M0101/1**
**316 Route de Bayonne**
**31060 Toulouse Cedex (FR)**

(56) Documents cités:
**DE-A1-102005 046 612    DE-C1- 4 010 507**
**FR-A1- 2 930 669    US-A1- 2006 243 857**
**US-A1- 2008 030 073**

**Description**

La présente invention se rapporte à un dispositif et un procédé de détermination d'un état de piste, ainsi qu'à un système et procédé d'aide à l'atterrissage et/ou au décollage d'aéronefs, et à des aéronefs équipés de tels dispositifs et systèmes.

Lors des phases d'atterrissage et de décollage, et plus généralement de roulage d'un avion, la connaissance de l'état de surface de la piste est d'une importance capitale. En effet, de cette connaissance dépend la prédiction de performance de freinage de l'avion. Il est ainsi possible :

- d'estimer au mieux la distance nécessaire pour arrêter l'avion dans un souci de sécurité,
- de ne pas surestimer cette distance d'arrêt nécessaire pour immobiliser l'avion et donc de ne pas pénaliser, outre mesure, les opérations d'utilisation de la piste et de l'avion.

Or, les performances de freinage d'un avion sur une piste dite contaminée sont très difficiles à prédire du fait de la difficulté à connaître de manière fiable et précise la contribution de l'état de piste à la décélération de l'avion, notamment en termes d'adhérence et de traînées de projection et déplacement en cas de contaminant épais. Les contaminants peuvent être tout élément venant se déposer sur la piste "originelle", comme par exemple des gommes déposées lors d'atterrissages précédents, de l'huile, de l'eau de pluie formant une couche plus ou moins uniforme sur la piste, de la neige, de la glace, etc.

La connaissance d'une telle contribution de l'état de piste peut apparaître profitable pour améliorer des systèmes d'atterrissage tels que celui décrit par exemple dans le document FR-2897593.

Cette connaissance peut également s'avérer importante pour sécuriser le décollage d'avions, ceux-ci devant estimer, par exemple, le point de piste de non retour ne permettant plus un freinage d'urgence en toute sécurité sur la portion de piste restante.

Des premières solutions pour estimer l'état de la piste ont déjà été mises en place, mais les mesures de l'adhérence de la piste sont aujourd'hui très difficiles, peu efficaces, non fiables et difficilement transposables du contexte des moyens de mesure utilisés à celui d'un avion roulant sur la même piste.

En particulier, des solutions complètes et fiables devraient estimer un état de piste:

- indépendant des moyens de mesure utilisés;
- utilisable par tout autre avion, et notamment par son système d'atterrissage;
- mis à jour de façon régulière;
- corrélé à une position de la piste;
- pour plusieurs points ou portions de piste de sorte à couvrir l'ensemble de la piste;
- sans nécessiter une fermeture de la piste.

On connaît notamment la mesure de l'adhérence via des machines à friction ou "*mu-meters*", par exemple des véhicules tractés ou des voitures spéciales, qui donnent des résultats disparates, potentiellement non cohérents entre eux, non représentatifs pour un avion en raison d'échelles de phénomènes différentes telles que les charges et le comportement des pneus. Ces résultats ne sont donc pas exploités par les autres avions, mais uniquement de façon interne par les aéroports pour obtenir une indication de la détérioration de piste.

En outre, de telles mesures nécessitent une fermeture de la piste pendant plusieurs minutes, ce qui peut être préjudiciable compte tenu du trafic toujours plus important dans les aéroports. L'estimation d'un état de piste par des "*mu-meters*" n'est donc généralement pas mise à jour de façon régulière.

On a recours également en pratique à l'inspection visuelle et manuelle de la piste en plusieurs points de celle-ci, par un agent, de sorte à obtenir un type et une épaisseur de contaminant le long de la piste. Cette approche ne donne cependant qu'une indication dépendant fortement de l'endroit où a été réalisée cette inspection. Par ailleurs, elle requiert la fermeture de la piste pendant de longues périodes (de l'ordre de vingt minutes), incompatibles avec le trafic actuel des aéroports. L'estimation de l'état de piste n'est donc pas régulièrement mise à jour par inspection visuelle.

Egalement, on connaît les "*Reported Braking Actions*" ou "*Pilot Reports*" (PIREP) qui sont en fait le ressenti du pilote de l'avion sur ses performances de freinage avec une séparation en plusieurs niveaux simples d'appréciation: par exemple bon / bon-moyen / moyen / moyen-faible / faible / nul (en pratique indiqués selon les termes anglo-saxons suivants: "*good*" / "*good-medium*" / "*medium*" / "*medium-poor*" / "*poor*" / "*nil*"), à partir desquels il est possible d'informer manuellement l'avion en approche d'atterrissage. Dans les aéroports avec trafic, les avions se succédant toutes les deux minutes par exemple, des estimations régulières sont ainsi obtenues.

Toutefois cette solution est subjective, dépend de l'avion et prend en compte des contributions autres que le freinage des roues (le pilote n'étant pas capable d'identifier la part exacte des différents moyens de freinage de son avion : traînée aérodynamique, poussée ou contre-poussée moteur et freinage des roues).

Au contraire, la présente invention concerne une solution d'estimation d'un état de piste plus fiable, notamment objective et représentative du comportement des avions.

Dans ce domaine, il a déjà été développé des solutions d'analyse applicables en différé au sol pour estimer *a posteriori* l'état de la piste lors d'un incident ou d'un accident en service, ou pour valider en "temps réel" des vols d'essai.

Ces solutions s'appuient généralement sur des mesures de la décélération de l'avion lors de l'atterrissage. Puis au sol, des traitements différés sont effectués pour estimer l'adhérence de la piste à partir de cette décélération mesurée, en lui retranchant notamment des composantes ou contributions aérodynamiques, moteurs et contaminantes, issues de modèles à partir d'autres mesures effectuées sur l'avion ou en dehors.

Ces traitements effectués tiennent compte du type d'avion concerné car la mesure de la décélération à elle seule ne permet pas une exploitation aisée par un autre avion.

En outre, ces traitements sont longs, manuels et non compatibles avec une exploitation intensive d'un aéroport où l'on requiert une estimation de l'état de la piste dans un délai bref avant que l'avion suivant n'effectue à son tour une phase de roulage sur la piste, soit pour atterrir, soit pour décoller.

Par ailleurs, on connaît du document US 2006/243857 une méthode et un dispositif pour estimer des caractéristiques relatives à une piste d'atterrissage. Un traitement temps réel est mené au cours duquel différents paramètres avion ou externes sont acquis et enregistrés. A partir de ces paramètres enregistrés, une estimation de la décélération due uniquement au freinage est réalisée à partir notamment de la décélération $A_x$ de l'avion, de la poussée moteur $A_{reverse\ thrust}$ et des traînées aérodynamiques $A_{drag}$. Un profil "$\mu$" de friction est alors déterminé afin de déterminer si l'avion est en limite de freinage ou non, et avertir en conséquence le pilote.

Toutefois ces informations ne sont pas simplement exploitables en un temps satisfaisant pour informer les avions à l'approche.

Dans la publication FR 2 930 669 (également publiée sous la référence US 2009/0292483), un tel profil d'adhérence ou de friction p (généralement identifié "*friction curve*" dans la littérature) obtenu pour l'avion courant est comparé à un ensemble de profils d'adhérence prédéterminés afin d'obtenir une caractérisation de l'état de piste.

Une difficulté dans la détermination de l'état de piste réside dans l'appréciation d'une valeur du coefficient d'adhérence p eu égard à l'environnement physique de l'avion, cet environnement physique concerne non seulement la piste mais également l'avion lui-même (par exemple ses pneus).

Par exemple, un petit avion peut connaître une adhérence p maximum de 1,3 sur une piste sèche et de 0,8 sur une piste mouillée, alors qu'un gros porteur (*Very Large Aircraft* ou VLA) connaît une adhérence p maximum de 0,6 sur la même piste sèche et de 0,4 sur la même piste mouillée.

Dans cet exemple, la valeur 0,6 de p n'indique pas nécessairement une piste sèche. Lorsque c'est le cas, c'est pour un avion particulier, à une certaine vitesse, utilisant des pneus particuliers et atterrissant à une certaine température.

De cet exemple, on comprend donc que l'estimation uniquement d'un coefficient d'adhérence p ne permet pas de corréler, de façon fiable et précise, les mesures avec un état de piste.

La présente invention vise à pallier tout ou partie de ces inconvénients et, dans ce dessein, vise notamment un procédé de détermination d'un état de piste d'atterrissage, comprenant les étapes suivantes:

- acquisition de données de mesure relatives à au moins une grandeur physique d'un aéronef, pendant une phase de roulage de l'aéronef sur ladite piste;
- obtention, à l'aide des données acquises, d'une pluralité de valeurs estimées d'adhérence "$\mu$" de la piste, correspondant à une pluralité respective d'instants de roulage de l'aéronef;
- obtention, à l'aide des données acquises, d'une valeur de rapport de glissement "s" d'au moins une roue de l'aéronef pour chaque dit instant de roulage, de sorte à obtenir une pluralité de couples [s,$\mu$];
- détermination d'un état de piste par comparaison du profil des couples [s,$\mu$] avec au moins un profil prédéterminé.

La présente invention accroît la précision et la fiabilité de l'estimation d'un état de piste. C'est notamment grâce à l'utilisation du rapport de glissement en combinaison avec l'adhérence p, lequel rapport permet de tenir compte des conditions opérationnelles du système de freinage de l'aéronef réalisant les mesures. L'état de piste obtenu par comparaison avec des profils théoriques s'avère être indépendant de l'aéronef au contraire par exemple de la prise en compte de l'adhérence p seule, ou de la prise en compte d'une vitesse de glissement (dépendante de l'avion considéré) comme décrit dans la publication WO 96/14564.

En effet, le rapport de glissement combiné à l'adhérence p permet de retranscrire le degré de freinage demandé par l'équipage: par exemple un pilote qui atterrit sur la piste peut solliciter immédiatement un freinage maximal, puis après quelques secondes, voyant que le freinage est efficace, relâcher ledit freinage jusqu'à atteindre la sortie souhaitée. La prise en compte de ce degré de freinage à l'aide du profil $\mu$-rapport de glissement permet, selon l'invention, de mieux corréler l'adhérence mesurée à l'état réel de la piste.

L'état de piste servant à qualifier l'état de contamination de la piste selon l'invention est rendu encore plus indépendant de l'aéronef au sein duquel les mesures sont effectuées. Il peut ainsi être exploité par tout autre aéronef ayant des caractéristiques différentes du premier.

A titre illustratif, l'état de piste peut revêtir la forme d'une caractérisation de l'état de piste par l'identification d'un type et d'une épaisseur de contaminant. En variante, il peut indiquer un niveau d'adhérence de la piste.

Les mesures et l'estimation de l'état de piste peuvent notamment être réalisées au sein de l'aéronef concerné, alors que celui-ci est en phase terminale de roulage (vers son point de parking par exemple). Ainsi, l'information résultante d'état de piste peut être transmise au plus vite aux aéronefs en approche.

Corrélativement, l'invention vise également un dispositif de détermination d'un état de piste d'atterrissage, comprenant:

- un module d'acquisition de données de mesure relatives à au moins une grandeur physique d'un aéronef, pendant une phase de roulage de l'aéronef sur ladite piste;
- un calculateur pour obtenir, à l'aide des données acquises, une pluralité de valeurs estimées d'adhérence "μ" de la piste, correspondant à une pluralité respective d'instants de roulage de l'aéronef;
- un calculateur pour obtenir, à l'aide des données acquises, une valeur de rapport de glissement "s" d'au moins une roue de l'aéronef pour chaque dit instant de roulage, de sorte à obtenir une pluralité de couples [s,μ];
- un module de détermination d'un état de piste par comparaison du profil des couples [s,μ] avec au moins un profil prédéterminé.

Le dispositif selon l'invention présente des avantages similaires à ceux du procédé exposé ci-dessus, notamment celui de fournir une estimation d'un état de piste de façon plus fiable et plus précise.

Un autre aspect de l'invention concerne un système d'assistance au pilotage d'aéronefs, notamment pour l'atterrissage de ceux-ci, comprenant au moins un dispositif tel que présenté ci-dessus équipant au moins un aéronef, et une station au sol apte à recevoir une information d'état de piste déterminé par ledit dispositif et apte à transmettre cette information d'état de piste à au moins un autre aéronef, notamment en phase d'approche.

L'exploitation de cette information par l'aéronef en phase d'approche peut être variée, par exemple par l'affichage de celle-ci pour le pilote ou par son utilisation comme entrée d'un système d'aide à l'atterrissage.

De même, l'invention vise également un système d'assistance au pilotage d'aéronefs, comprenant une pluralité de dispositifs de détermination d'un état de piste tel que présenté ci-dessus et équipant une pluralité correspondante d'aéronefs, et une station au sol pour la retransmission des états de piste, ladite station au sol étant apte :

- à recevoir des états de piste déterminés par ladite pluralité de dispositifs ;
- à fusionner lesdits états de piste reçus ; et
- à transmettre au moins une information d'état de piste résultant de ladite fusion à au moins un autre aéronef,

de sorte à fournir une cartographie enrichie d'état de piste audit au moins un autre aéronef.

On obtient ainsi une meilleure cartographie de la piste d'atterrissage pour les aéronefs en phase d'approche. Bien sûr, différentes politiques de fusion et conservation des informations peuvent être mises en place, comme celle de tenir compte des changements météorologiques au niveau de l'aéroport, ou encore de l'ancienneté des informations et leur remplacement par des informations correspondantes (même position sur la piste) plus récentes.

Corrélativement, l'invention concerne également un procédé d'assistance à l'atterrissage d'aéronefs, comprenant des étapes se rapportant aux moyens du système ci-dessus.

Un autre aspect de l'invention concerne un aéronef comprenant au moins un dispositif de détermination d'un état de piste tel que présenté ci-dessus.

Les procédé et systèmes d'assistance, ainsi que l'aéronef, présentent des caractéristiques et avantages analogues aux procédé et dispositif de détermination exposés précédemment.

Des caractéristiques optionnelles de l'invention sont par ailleurs définies dans les revendications dépendantes.

Notamment, dans un mode de réalisation de l'invention, la détermination d'un état de piste par comparaison comprend la sélection, parmi un ensemble de profils prédéterminés et associés chacun à état de piste différent, du profil prédéterminé le plus proche du profil des couples [s,μ]. La sélection peut reposer sur le calcul d'une distance entre ledit profil des couples et chacun des profils prédéterminés, par exemple la distance L2 entre les valeurs p pour chaque rapport de glissement s obtenu, ou vice et verse entre les valeurs s pour chaque coefficient p obtenu, ou un mélange avantageux.

Il en résulte une détermination rapide, basée sur des opérations simples.

Selon une variante, la détermination d'un état de piste par comparaison comprend l'obtention d'une pluralité de valeurs de pente "k" du profil des couples [s, μ] pour une pluralité des valeurs d'adhérence p, de sorte à obtenir une pluralité de couples [k,μ]; et la détermination, parmi un ensemble de zones prédéterminées dans l'espace [k,μ] et associées chacune à état de piste différent, d'une zone d'appartenance d'une majorité desdits couples [k,μ].

La valeur de pente peut être obtenue par simple régression linéaire entre deux ou trois couples successifs autour d'une valeur p considérée.

Cette disposition s'appuie sur le fait que la pente du profil μ-rapport de glissement est fortement corrélée à l'état de la piste, surtout dans la zone de freinage non limitée par l'adhérence. De ce fait, cette disposition assure une estimation efficace de l'état de piste.

Comme il sera vu par la suite, des paramètres environnementaux sont pris en compte afin d'obtenir l'estimation la plus précise.

En particulier, au moins une valeur de raideur mécanique relative au pneu de la roue de l'aéronef est calculée à l'aide de données de mesure acquises lors du roulage, et les zones prédéterminées sont définies à l'aide de l'au moins un profil prédéterminé, lequel est fonction de la valeur de raideur mécanique calculée.

Dans une variante à l'utilisation de plusieurs profils prédéterminés ou de la pente "k", le profil prédéterminé est un profil paramétrique, et la détermination d'un état de piste par comparaison comprend l'ajustement (ou "*fitting*" selon la terminologie anglo-saxonne) du profil paramétrique sur lesdits couples $[s,\mu]$ et la détermination d'un état de piste à partir d'au moins une valeur caractéristique du profil ajusté.

Cette approche permet une détermination encore plus fine de l'état de piste, car notamment plusieurs valeurs caractéristiques du profil ajusté peuvent être prises en compte.

A titre d'exemple l'au moins une valeur caractéristique représentatives de l'état de piste peut être choisie parmi l'ensemble comprenant des paramètres ajustés dudit profil paramétrique, une valeur d'adhérence maximale $\mu_{max}$ et une valeur de pente initiale (c'est-à-dire avant d'atteindre l'adhérence maximale $\mu_{max}$).

Notamment, ladite valeur caractéristique du profil ajusté comprend une valeur maximale d'adhérence dudit profil ajusté.

Dans un mode de réalisation de l'invention, ledit profil prédéterminé est fonction de paramètres de l'aéronef et de paramètres environnementaux déterminés aux instants de roulage considérés. La prise en compte de ces paramètres permet d'affiner au mieux l'estimation de l'état de piste.

En particulier, ledit profil prédéterminé est de la forme $f(s,\mu_k,\mu_s,a,F_Z,c_p)$ où, aux instants de roulage correspondants, $\mu_k$ est un coefficient dynamique d'adhérence, $\mu_s$ est un coefficient statique d'adhérence, a est représentative de la zone de contact entre le pneu de la roue de l'aéronef et la piste, $F_Z$ est une charge verticale appliqué sur l'axe de la roue et $c_p$ est une valeur de raideur mécanique relative au pneu de la roue. A noter que ladite adhérence utilisée dans le profil $[s,\mu]$ combine le coefficient dynamique et le coefficient statique. Bien entendu ces divers paramètres peuvent être calculés à l'aide des données de mesure acquises comme décrit par la suite.

Selon une caractéristique particulière de l'invention, une valeur de rapport de glissement "s" d'une roue de l'aéronef pour un instant de roulage est obtenue par calcul du rapport suivant: où $V_x$ est la vitesse au sol de l'aéronef à cet instant de roulage et $V_c$ est la vitesse linéaire (i.e. la vitesse périphérique ou circonférentielle) de la roue au même instant de roulage. L'utilisation d'un tel rapport permet de faire abstraction, dans la détermination de l'état de piste, des vitesses propres à chaque type d'aéronef. Les états de piste obtenus à l'aide des profils $[s,\mu]$ sont ainsi indépendants des aéronefs considérés.

Dans un mode de réalisation de l'invention, ladite détermination d'un état de piste par comparaison est itérée sur plusieurs jeux de couples $[s,p]$, les jeux correspondant à des phases de roulage distinctes. Cette approche permet de corréler précisément des états de piste déterminés avec plusieurs positions le long de la piste.

Ainsi, différents états de piste déterminés peuvent être associés à différentes portions de piste correspondant aux phases de roulage respectives. En pratique, même si l'on obtient des états de piste pour un grand nombre de positions le long de la piste, on prévoira de séparer la piste en trois portions consécutives et de regrouper ces états pour chacune de ces portions de piste.

Selon cette disposition, l'état de piste est associé à au moins une information de position de l'aéronef sur ladite piste. En effet, les aéronefs n'atterrissent pas tous sur les mêmes parties de piste. On associe ainsi l'état de piste déterminé avec cette position sur la piste. En cumulant de telles informations complémentaires, il est ainsi possible d'obtenir une cartographie précise de la piste d'atterrissage.

Selon une caractéristique particulière, les phases de roulage distinctes correspondantes à des intervalles temporels distincts successifs, ou des intervalles de distances parcourus par l'aéronef successives, ou des intervalles de vitesses de l'aéronef successives. Cette disposition permet d'effectuer des calculs sur ces intervalles pour déterminer un état de piste. A noter, comme illustré par la suite, qu'en choisissant des intervalles relativement faibles (par exemple 5 secondes, 30 noeuds, 300 mètres selon la nature de l'intervalle), il est possible d'estimer des paramètres environnementaux moyens (vitesse, raideur des pneus, température, etc.) une seule fois pour ledit intervalle afin de simplifier les calculs et l'application de l'au moins un profil prédéterminé.

Dans un mode de réalisation de l'invention, un couple composé d'une valeur estimée d'adhérence de la piste et d'une valeur de rapport de glissement est obtenu pour chacune d'une pluralité de roues de l'aéronef, à un dit instant de roulage de l'aéronef. Cette disposition permet de corréler les informations obtenues à chacune des roues, notamment pour identifier des mesures/estimations erronées, afin d'améliorer la fiabilité de l'estimation selon l'invention. Chaque roue peut donner lieu à une estimation d'état de piste. Toutefois, on préférera une estimation unique à partir des profils $[\mu,s]$ de chaque roue.

D'autres particularités et avantages de l'invention apparaîtront encore dans la description ci-après, illustrée par les dessins ci-joints, dans lesquels :

- la **figure 1** représente une vue générale d'un système pour la mise en oeuvre de la présente invention ;
- la **figure 2** est un graphique illustrant les différences de capacité freinage et de décélération de deux avions sur une même piste ;
- la **figure 3** représente la décomposition de la décélération d'un avion lors d'un atterrissage sur piste contaminée ;
- la **figure 4** représente de façon schématique un exemple de dispositif objet de l'invention ;

- la **figure 5** représente, sous forme d'un logigramme, des étapes de traitement selon l'invention ;
- la **figure 6** illustre le profil théorique de la relation coefficient d'adhérence - rapport de glissement, mis en oeuvre dans le processus de la **figure 5** ;
- la **figure 7** illustre un premier mode de réalisation de la détermination d'un état de piste selon l'invention ;
- la **figure 8** illustre un deuxième mode de réalisation de la détermination d'un état de piste selon l'invention ; et
- la **figure 9** illustre un troisième mode de réalisation de la détermination d'un état de piste selon l'invention.

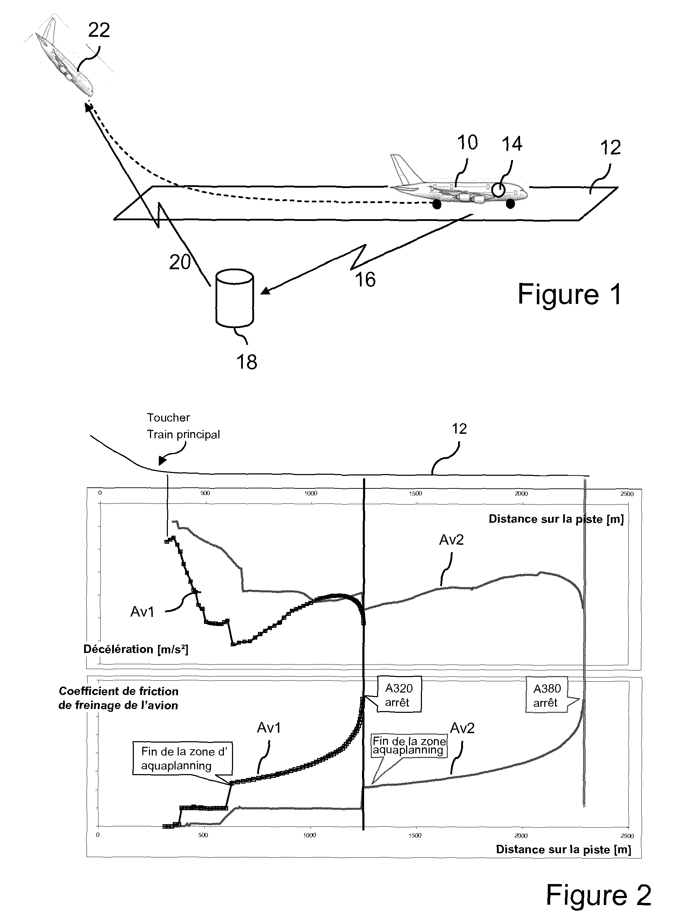

Sur la **figure 1,** on a représenté un avion 10 en fin de phase de roulage/freinage sur une piste 12 d'aéroport. Cet avion 10 est équipé d'un dispositif 14 objet de l'invention apte à déterminer un état de la piste 12.

Par une liaison de communication 16 prévue notamment à cet effet, l'avion 10 qui détermine à bord l'état de piste, communique celui-ci à une station centrale au sol 18 de l'aéroport. En variante, les mesures effectuées au niveau de l'avion 10 peuvent être transmises à la station au sol 18, laquelle réalise les opérations de détermination d'un état de piste selon l'invention. Cette station au sol, après d'éventuels traitements internes, communique (20) un état de piste aux avions 22 en phase d'approche pour atterrissage ou ceux prêts au décollage.

Ces derniers à leur tour officieront en tant qu'avion 10 à la fin de leur atterrissage ou décollage pour enrichir la station centrale 18 d'informations complémentaires sur l'état de piste, afin d'obtenir notamment une cartographie toujours plus complète de la piste 12.

En effet, la station centrale 18 acquiert et enregistre ces informations d'état de piste issues du dispositif de l'avion 10 et des avions précédents, puis les fusionne, les données des autres avions permettant de reconstruire une information temporelle et spatiale sur la piste. Généralement, cette phase de traitement et de fusion est réalisée au sol afin, par exemple, de servir aux analyses de type FOQA ("*Flight Operational Quality Assurance*"). En variante, on peut réaliser une telle phase à bord des avions 22 qui récupèrent de façon dé-coordonnée les données d'autres avions (de la même compagnie par exemple) ayant déjà atterris.

Comme on le verra par la suite, la détermination d'un état de piste selon un exemple de réalisation de l'invention fait intervenir :

- un coefficient d'adhérence (ou friction) "μ" à différents instants de roulage; et
- un rapport de glissement "s" à ces mêmes instants.

Comme évoqué dans la publication FR 2 930 669, le coefficient d'adhérence utilisée dans cette détermination peut être calculé à partir de ou corrélé à:

- la position de l'avion 10 sur la piste 12;
- la vitesse de l'avion pendant la mesure (ou l'estimation) de l'adhérence; et
- la présence de traînées dites contaminantes.

Concernant la position de l'avion, tous les avions ne roulant pas sur la totalité de la longueur de piste, la description de l'adhérence et donc de l'état de piste est associée à une position sur la piste, au moins longitudinale, voire latérale, de sorte à cartographier la piste 12.

Concernant la vitesse de l'avion pendant la mesure (ou l'estimation) de l'adhérence, généralement cette adhérence augmente quand la vitesse de l'avion par rapport au sol diminue. De plus, suivant le type et l'épaisseur de contaminant, on peut rencontrer un phénomène d'aquaplaning ou équivalent pour des vitesses (sol) supérieures à une valeur seuil (variable d'un avion à un autre), et pour lesquelles l'adhérence est quasi inexistante. Le test dont les résultats sont fournis en **figure 2** illustre assez clairement l'influence de la vitesse. Dans ce test, un avion monocouloir Av1 de type A320 (nom commercial) atterrit sur une piste contaminée par de l'eau avec ¼" (soit environ 6,5 mm) d'épaisseur. Cet avion Av1 va s'arrêter sur les premiers 1200m de piste, avec un coefficient d'adhérence μ d'environ 0,1 à 0,3 (modèle "*water* ¼"" réglementaire, niveau annoncé par un pilote comme *"medium"* à "*poor*"). Un gros porteur Av2 de type A380 (nom commercial) atterrit juste après l'avion Av1 sur le même état de piste. Il subit un aquaplaning sur 1200m, avec une adhérence de l'ordre de 0,05 (niveau "*poor*" voire "*nil*"), du fait de sa plus forte vitesse d'approche. On a donc sur la même portion de piste un facteur de deux à six entre les adhérences vues par deux avions différents, si on ne prend pas en compte cet effet vitesse. Par conséquent, lors des traitements selon le présent exemple, on traite les données mesurées rapportées à la vitesse de l'avion au sol de préférence à une corrélation avec le temps.

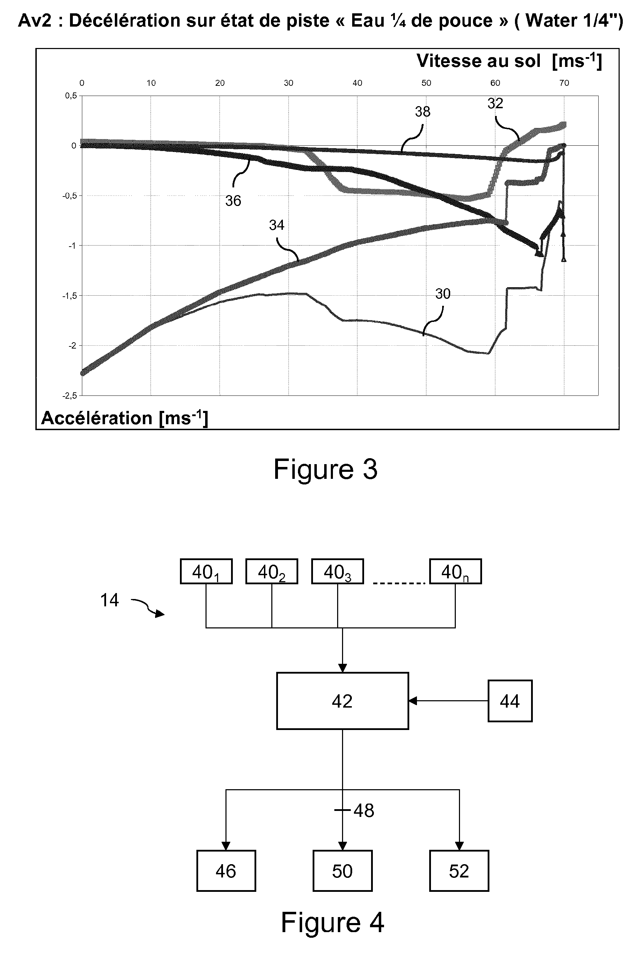

Enfin, concernant la présence de traînées dites contaminantes, celles-ci peuvent être en projection, en déplacement et en compression du contaminant, et contribuent à la décélération de l'avion lorsqu'il roule sur/ dans un contaminant d'une certaine épaisseur. Le fait de ne pas prendre en compte ces forces de traînée risque de fournir une surestimation de l'adhérence de la piste et donc surestimer les capacités de décélération pour un avion suivant. En effet, ces traînées et leur impact sont variables d'un avion à un autre, selon par exemple la taille de ce dernier, la hauteur de la voilure ou l'architecture de trains, de telle sorte qu'elles peuvent constituer une part importante des forces de décélération ou, au contraire, apparaître négligeables. Sur la **figure 3,** on a représenté la décomposition de la décélération 30 d'un avion 10 lors d'un atterrissage sur piste 12 contaminée, en la poussée 32 (ou contre-poussée) des moteurs, la force de freinage 34 au niveau des roues, la traînée aérodynamique 36 et la traînée contaminante 38. On voit que la contribution des traînées contaminantes 38 peut monter jusqu'à 10% de la décélération totale de l'avion à forte vitesse, au-delà de 50 m.s$^{-1}$, et ainsi impacter la distance d'arrêt d'une centaine de mètres.

Sur la **figure 4,** on a représenté schématiquement un exemple de dispositif 14 objet de l'invention équipant les avions 10.

Le dispositif 14 comprend une pluralité de systèmes de mesures $40_1$, $40_2$, ..., $40_n$, reliés à un module de calcul d'estimations 42.

En particulier, le dispositif comprend une ou plusieurs centrales inertielles ADIRS $40_1$ (pour "*Air Data Inertial Reference System*") fournissant au module 42 des mesures de vitesse au sol de l'aéronef, de position, d'accélération et de température; un système de gestion de vol FMS $40_2$ (pour "*Flight Management System*"); un équipement $40_3$ d'estimation de grandeurs physiques des pneus (température interne, pression interne), un module GPS $40_n$ fournissant la position de l'avion 10.

Une base de données Aéroport 44 reliée au module de calcul 42 est également prévue. Cette base 44 ou système de navigation aéroportuaire OANS (pour "*On-board Airport Navigation System*") fournit au module 42 des données de base aéroport (par exemple altitude) et des données de la piste (position GPS, orientation, inclinaison de pente). En variante, le système de gestion en vol FMS $40_2$ peut fournir de telles données.

De façon générale, de nombreuses données peuvent être fournies et utilisées pour améliorer ou affiner les modèles théoriques, profils et autres algorithmes évoqués ci-après. A titre illustratif, le module 42 reçoit (de l'aéroport 44 ou d'autres modules $40_i$ de l'avion) la localisation du centre de gravité CG de l'avion 10, la pente de la piste 12, la température extérieure, des données de vent (force et direction), des vitesses (au sol, aérodynamique vraie et calibrée; des roues), des données d'altitude (pression, ...), la masse de l'avion 10, des données d'aéroport, des données de piste utilisée notamment les coordonnées GPS de la piste, des données de position GPS de l'avion, des paramètres de conduite des moteurs, des informations d'enfoncement des pédales de frein, des état des surfaces mobiles (tels que les dispositifs hypersustentateurs, la gouverne de profondeur, les aérofreins, les ailerons), des informations de mesure relatives aux pneus (température et pression internes), des informations booléennes représentatives par exemple du toucher du train principal sur la piste et de l'ouverture des portes de rétro-poussée moteur, etc..

On note que tout ou partie de ces données, principalement celles relevant de données dynamiques de l'avion 10 ou de conditions extérieures par exemple, sont mises à jour en fonction du temps notamment pendant le roulage de l'avion: vitesses, niveaux poussée moteurs, vent, température et pression des pneus, etc. On prévoit alors d'horodater les données mesurées afin de faciliter le rapprochement de certaines mesures avec la vitesse sol de l'avion 10 au même moment.

Ces mesures sont effectuées pendant la phase de roulage et de freinage de l'avion 10 à l'atterrissage, par exemple jusqu'à une valeur seuil de vitesse de l'ordre de 10 noeuds (soit 18,52 km.h$^{-1}$). En particulier, on peut démarrer les mesures et l'enregistrement des données mesurées dès lors que l'avion 10 atteint une altitude préfixée au-dessus de l'aéroport. En variante, la détection du premier toucher de l'avion 10 sur la piste 12 peut déclencher l'enregistrement des données mesurées.

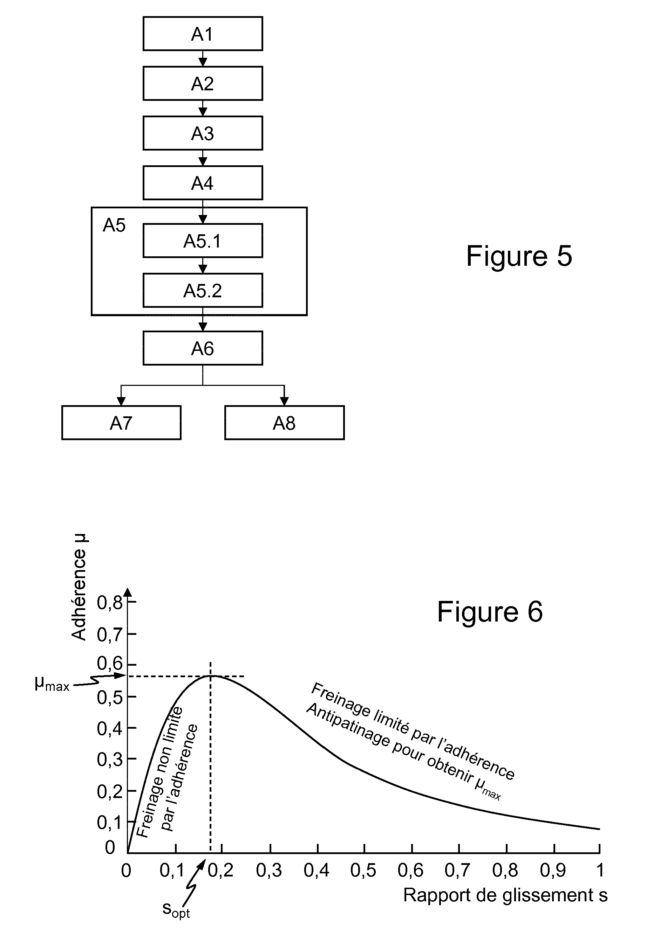

Le module de calcul et d'estimations 42 traite alors tout ou partie de ces données selon différentes étapes décrites ci-après, notamment en lien avec la **figure 5**. Le traitement des données mesurées est initié dès que la vitesse au sol de l'avion 10 atteint une valeur seuil, ici de 20 noeuds, soit environ 37 km.h$^{-1}$. Ceci permet de traiter l'ensemble des données collectées d'un coup.

Le résultat du traitement embarqué d'estimation de l'état de piste 12 effectué par ce module de calcul 42 est fourni sous la forme d'une ou plusieurs informations suivantes :

- un niveau d'adhérence piste. Cette information peut être un niveau déterminé parmi les niveaux ci-dessus (*"good"* / *"good-medium"* / *"medium"* / *"medium-poor"* / "*poor*" / *"nil",* ou un code numérique entre 0 et 5);
- une caractérisation concise de l'état de piste rencontré (si reconnu selon l'algorithme mis en oeuvre dans le dispositif 14), notamment du contaminant détecté, par exemple DRY (pour piste sèche), WET (pour piste humide), WATER ¼" (pour eau 6,3 mm), WATER ½" (pour eau 12,7 mm), SLUSH ¼" (pour neige fondue 6,3 mm), SLUSH ½" (pour neige fondue 12,7 mm), COMPACTED SNOW (pour neige tassée) et ICY (pour glace), cette dénomination d'état de piste (généralement type et épaisseur de contaminant) étant issue d'une nomenclature connue.

Un affichage 46 de ces informations d'état de piste déterminées est réalisé dans le cockpit de l'avion 10. Le pilote valide (48) alors ou non ces données affichées par rapport à son jugement et à ses données visuelles, c'est-à-dire en quelque sorte conformément à ses automatismes de *"Reported Braking Action"*. Les informations d'état de piste validées par le pilote sont alors transmises (50) à l'extérieur de l'avion 10, vers le centre de contrôle et de management de l'aéroport, par des voies classiques, par exemple radiofréquence.

En variante, la transmission (50) des informations d'état de piste peut être automatique sans validation du pilote.

Un éventuel stockage (52) des informations calculées est effectué dans l'avion 10.

On décrit maintenant, en référence aux **figures 5 à 9**, un exemple des traitements effectués à bord de l'avion 10 pendant la phase d'approche et d'atterrissage sur la piste 12.

Lors d'une étape A0 non représentée et réalisée pendant l'approche de l'avion 10 avant atterrissage, des données d'estimation d'état de piste 12 sont acquises par le système embarqué par communication avec l'aéroport. Ces données résultent notamment de la fusion de plusieurs informations d'état de piste fournies par divers avions ayant déjà atterri. Cette fusion permet de donner l'évolution temporelle et spatiale de l'état de piste pour une utilisation manuelle par le pilote ou éventuellement automatique par un système d'aide à l'atterrissage, de type "*Brake-To-Vacate*" (système permettant au pilote de désigner et d'atteindre une bretelle de la piste 12).

Par exemple, un affichage textuel au pilote de l'avion 10, comme suit, précise pour un aéroport et une piste 32R donnée les estimations des deux avions précédents, ici un A330 (nom commercial) suivi d'un avion Av1 évoqué précédemment, pour trois portions de piste 12 :

> *LFBO / 32R*
> *A330 / 10h32 GMT / xx / WET / WET*
> *A320 / 10h39 GMT / WET / WET / xx*

En variante, un affichage graphique sur une carte aéroportuaire par exemple, peut être proposé après fusion spatiale et temporelle des données, en utilisant notamment un code couleur pour restituer l'état de diverses portions de la piste.

L'étape A1 d'acquisition de données se déroule en partie avant le toucher de l'avion 10 sur la piste 12, notamment pour l'acquisition de données statiques (position, altitude, et pente de la piste; masse de l'avion, etc.), et en partie après le toucher lors de la phase à proprement parler de roulage et de freinage de l'avion 10 sur la piste 12, pour l'acquisition des données dynamiques dépendantes du temps. Cette dernière acquisition est réalisée lors de la décélération de l'avion jusqu'à une vitesse sol seuil de 10 noeuds par exemple. Ces données peuvent être filtrées pour supprimer une partie de bruit inhérent aux mesures et à l'instrumentation, et/ou identifier certaines séquences (zones stabilisées, aquaplaning par exemple) et/ou faire des traitement spécifiques suivant les zones si besoin (distinction transitoires et zones stabilisées par exemple).

Différents données relatives à au moins une grandeur physique de l'avion sont ainsi mesurées ou calculées à chaque pas de temps pendant le roulage, par exemple tous les dixièmes de seconde.

Cette étape A1 comprend par exemple:

- l'acquisition de la décélération, de la vitesse $V_x$ au sol et de la position (latitude et longitude) de l'avion 10;
- l'acquisition et/ou le calcul de la charge verticale $F_z$ appliquée aux roues de l'avion, soit de façon globale, soit pour chaque roue. Par exemple, des capteurs ad hoc peuvent être prévus au niveau de chaque roue pour déterminer la charge verticale qui leur est appliquée. En variante, une détermination globale peut reposer sur l'utilisation d'un modèle de répartition de charge de sorte à répartir le poids de l'avion et d'éventuelles charges aérodynamiques verticales sur chaque train d'atterrissage et sur chaque roue de chaque train;

- l'acquisition et/ou le calcul de la force de freinage, soit de façon globale, soit pour chaque roue. Le calcul de la force de freinage $F_b$ au niveau de chaque roue peut être réalisé à l'aide de la formule $F_b = T/R_r$ où T est le couple appliqué par le système de freinage et mesurable au niveau de chaque roue par un capteur ad hoc et $R_r$ représente le rayon de roulage dynamique de la roue (par exemple conformément à un modèle tenant compte des propriétés du pneu, tel l'écrasement). En variante, la force de freinage $F_b$ peut être calculée de façon globale pour les roues, en utilisant la balance des forces, comme montré sur la **figure 3**. A savoir que $ma = T - D_{aero} - F_b - D_{cont} - m\sin\gamma$, où *m* est la masse de l'avion 10, a l'accélération (ou décélération), T la poussée moteur (par exemple obtenue par la position de la manette des gaz et des paramètres moteurs tels que le régime moteur N1), $D_{aero}$ la traînée aérodynamique (par exemple obtenue par modélisation à partir de divers paramètres, par exemple l'angle d'incidence $\alpha$, l'assiette longitudinale $\theta$, une information de sortie des aérofreins), $D_{cont}$ la traînée résultant du contaminant de piste (par exemple basé sur une profil de piste correspondant à un état de piste annoncé) et $\gamma$ la pente de la piste;

- l'acquisition des vitesses de chaque roue, par exemple la vitesse en rotation $\omega$ ou la vitesse circonférentielle $V_c$ qui en dérive directement ($V_c = \omega.R_r$, où $R_r$ est le rayon de roulage dynamique de la roue/du pneu);

- l'acquisition de données relatives à l'environnement de la piste, par exemple la température ambiante, le type ou la texture du revêtement de la piste;

- l'acquisition de données relatives aux pneus, par exemple leur type et propriétés (propriétés de raideur mécanique, propriétés d'écrasement, caractéristiques thermiques, etc.) et des valeurs dynamiques (températures internes, pressions internes des pneus).

A l'étape A2, on estime, à chaque pas de temps, le coefficient d'adhérence $\mu$ de la piste 12, par la formule

$$\mu = \frac{F_b}{F_z}$$

. Ainsi, selon l'origine du calcul des forces $F_b$ et $F_z$, il résulte de cette étape A2 soit un coefficient d'adhérence global pour l'ensemble des roues, soit un coefficient d'adhérence $\mu_i$ pour chaque roue *i* considérée.

On note ici que grâce à l'horodatage des données mesurées, il est aisé de faire le lien entre chaque coefficient d'adhérence du profil d'adhérence ainsi évalué et la position correspondante de l'avion 10 sur la piste 12. En variante, on peut utiliser des techniques de type *"Flight Path Reconstruction"* ou FPR qui permettent de s'assurer que les données mesurées sont cohérentes d'un point de vue cinématique, par exemple en permettant de diminuer les erreurs de mesures par un biais constant ou relatif.

Les coefficients d'adhérence évalués peuvent cependant résulter de deux limitations différentes, l'une dite d'adhérence lorsque l'état de glissance ou d'adhérence de la piste limite le freinage, et l'autre dit de couple lorsque tout le couple de freinage demandé au niveau des commandes correspondantes est restitué. Ces limitations sont identifiées au travers du calcul du rapport de glissement "s" *("slip ratio"* selon la terminologie anglo-saxonne) comme illustré par la suite en référence à la **figure 6.**

Ainsi l'étape A3 consiste au calcul du rapport de glissement "s" pour chaque pas de temps:

$$s = \frac{V_x - V_c}{V_x}$$ où $V_x$ est la vitesse au sol de l'aéronef à cet instant de roulage et $V_c$ est la vitesse linéaire (i.e. la vitesse périphérique ou circonférentielle) de la roue au même instant de roulage. Pour un instant de roulage donné, on obtient ainsi plusieurs rapports de glissement $\{_{Sj}\}$, un pour chaque roue *j* de l'avion 10.

Le rapport de glissement "s" est représentatif des conditions opérationnelles du système de freinage de l'avion. En effet, s varie entre 0 et 1, où 0 signifie que la roue est libre en rotation ($V_c=V_x$) et 1 signifie que la roue est bloquée ($V_c=0$).

A l'étape suivante A4, on combine les coefficients $\mu$ avec les rapports de glissement s pour obtenir un ensemble de couples [$\mu$,s] pour les différents instants de roulage. Si des mesures et calculs sont effectués pour chaque roue ($\{\mu_i\}$ et $\{S_j\}$), alors plusieurs couples [$\mu_i,S_i$]$_i$ sont obtenus pour un même instant de roulage, i identifiant une roue de l'avion.

La **figure 6** illustre un exemple de profil théorique de la relation $\mu$=f(s).

Cette courbe présente un maximum d'adhérence $\mu_{max}$ pour un rapport de glissement optimal $s_{opt}$.

Deux types de freinage peuvent être mis en exergue à l'aide de cette figure.

Pour les rapports de glissement inférieurs à $s_{opt}$ (partie gauche sur la figure), le freinage est efficace en ce que la décélération obtenue par l'adhérence des pneus correspond à celle demandée par le pilote. On parle de freinage non limité par l'adhérence ("*non friction limited*"). Dans cette zone, si le pilote accroît la pression de freinage, l'adhérence et la décélération sont améliorées.

Pour les rapports de glissement supérieurs à $s_{opt}$ (partie droite sur la figure), le freinage est dit limité par l'adhérence (*"friction limited"*). L'adhérence sur la piste est insuffisante pour fournir la décélération demandée. Dans ce cas, un mécanisme d'antipatinage ("*anti-skid*") est généralement mis en oeuvre pour réguler la pression de freinage et fournir la meilleure décélération possible, si possible au niveau de $\mu_{max}$. Dans cette zone *friction limited,* une pression de freinage supplémentaire dégrade encore plus le freinage (diminution de l'adhérence).

La prise en compte de la relation entre l'adhérence $\mu$ et le rapport de glissement s (c'est-à-dire le comportement opérationnel du système de freinage) selon l'invention permet d'affiner l'estimation de l'état de piste comparativement à l'utilisation du seul coefficient d'adhérence.

Comme l'adhérence et le rapport de glissement sont fortement corrélés à la vitesse de l'avion 10, le traitement ultérieur des couples [$\mu$-s] est réalisé par intervalles, dans lequel une vitesse moyenne peut être considérée. En outre, cette approche par intervalles permet de tenir compte du fait que l'état de piste n'est peut-être pas homogène le long de la piste.

Selon diverses variantes, il peut s'agir d'intervalles temporels (division de la phase de roulage en intervalles de 5 secondes par exemple), d'intervalles métriques (division de la phase de roulage en section de 300 mètres de roulage par exemple) ou d'intervalles vitesse (division de la phase de roulage en intervalles de vitesses par exemple 150-120 noeuds, puis 120-90 noeuds, etc.). Dans la suite des explications aux fins d'illustration uniquement, il sera fait référence à des intervalles de vitesses.

Toutefois dans une variante à la division en intervalles, l'adhérence $\mu$ peut être considérée comme une fonction du rapport de glissement et de ladite vitesse. L'identification d'une courbe théorique prédéterminée similaire comme décrit par la suite se fera dans ce cas dans un espace tridimensionnel.

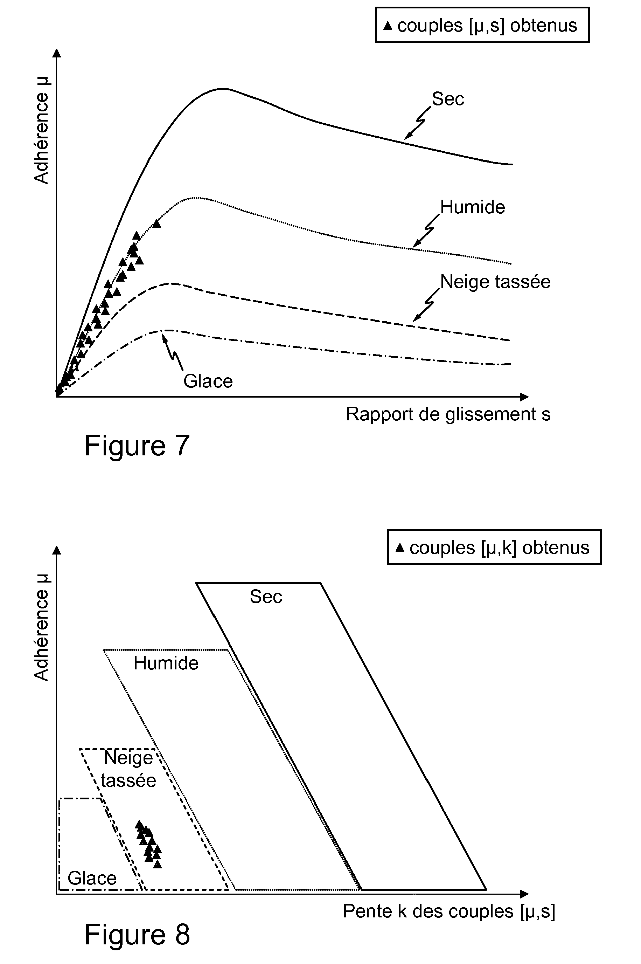

A l'étape A5, le profil des couples [$\mu$,s] (en tenant compte de l'ensemble des roues le cas échéant) pour l'intervalle de vitesses considéré est comparé à au moins un profil théorique prédéterminé afin de déterminer un état de la piste. Différentes approches peuvent être mises en oeuvre, comme illustré par la suite en référence aux **figures 7 à 9.**

Lors d'une première sous-étape A5.1, une relation théorique $\mu$-s est créée. Par exemple, elle peut reposer sur une théorie de contact piste-pneu connue sous l'appellation *Brush Model.* Ce modèle théorique prend en entrées des paramètres environnementaux courants de l'avion lors du roulage, par exemple les propriétés mécaniques des pneus, la température ambiante, la texture du revêtement de piste, la vitesse au sol de l'avion, les rapports de glissement des roues, la pression du pneu de chaque roue, les charges verticales sur chaque roue.

Ces divers paramètres étant acquis, calculés ou estimés à chaque instant de roulage (ou de façon globale pour un intervalle vitesse considéré), un modèle de contact piste-pneu est ainsi établi.

A titre d'illustration, ce modèle est de la forme $f(s,\mu_k,\mu_s,a,F_Z,c_p)$ où, aux instants de roulage correspondants, $\mu_k$ est un coefficient dynamique d'adhérence, $\mu_s$

est un coefficient statique d'adhérence, a est représentative de la longueur de contact entre le pneu de la roue de l'aéronef et la piste, $F_z$ est une charge verticale appliqué sur l'axe de la roue et $c_p$ est une valeur de raideur mécanique relative au pneu de la roue. A noter que l'adhérence $\mu$ susvisée combine le coefficient dynamique et le coefficient statique.

Ainsi, en faisant varier le rapport de glissement s et en utilisant d'autres valeurs mesurées ou calculées, il est possible d'obtenir une courbe $\mu$-s théorique pour un ensemble de conditions.

Ce modèle peut en outre être affiné grâce aux techniques de tribologie et de mécanique structurelle des pneus. Par exemple, le coefficient dynamique d'adhérence peut être affiné comme suit:

$$\mu_k = f\left(E, V_s, T, P, \frac{\Delta_h}{l}\right)$$

où E est le module de Young relatif au matériau (caoutchouc) de la bande de roulement du pneu, $V_s$ est la vitesse de glissement ($V_x$-$V_c$), T est la température ambiante, P est la pression de contact au niveau de la surface pneu-piste (obtenue par exemple par mesure de la pression interne du pneu et modélisation d'une répartition de pression sur la longueur de contact du pneu), et

$\dfrac{\Delta_h}{l}$ est une mesure de la texture macro de surface de la piste (à partir de la connaissance de cette texture ou d'une supposition de texture).

Par ailleurs, la connaissance de la structure du pneu permet d'affiner la valeur a de la longueur de la zone de contact: $a = f(F_z, P_t)$ où $P_t$ est la pression d'air interne d'un pneu considéré; et également la raideur mécanique du pneu: $c_p = f(E, F_z, P_t)$.

Enfin, les propriétés mécaniques du matériau (caoutchouc) peuvent varier en fonction de l'environnement opérationnel. Un affinage des paramètres ci-dessus consiste à définir: $E = f\left(T, T_r, V_s, \dfrac{\Delta h}{l}\right)$, avec

$T_r$ la température interne dudit matériau.

En combinant tous ces éléments de modélisation, il est possible d'obtenir un modèle complexe capable de prédire la réponse du système de freinage (c'est-à-dire la courbe $\mu$=f(s)) en fonction des conditions environnementales (température, nature du revêtement de piste, contaminent, type de pneu) et des conditions opérationnelles courantes de l'avion (vitesse, charge verticale, pression et température des pneus).

Ce modèle théorique est donc utilisé à l'étape A5.2 pour déterminer l'état de la piste pour chaque portion de piste correspondant aux intervalles de vitesses considérés.

Cette détermination repose sur le fait que le profil de la courbe $\mu$-s varie selon l'état de la piste (i.e. la capacité de glissement sur la piste).

La **figure 7** illustre un premier mode de réalisation de cette détermination.

Plusieurs courbes théoriques $\mu$-s sont préétablies sur la base du modèle précité, à l'aide d'une vitesse moyenne sur l'intervalle considéré, et en fonction de différents états idéaux de piste (par exemple neige tassée, glace, humide et sec dans le cas de la figure).

Dans ce mode de réalisation, la détermination d'un état de piste par comparaison comprend la sélection, parmi cet ensemble de profils prédéterminés et associés chacun à état de piste différent, du profil prédéterminé le plus proche du profil des couples [$\mu$,s] obtenus à l'étape A4.

On compare donc les points [$\mu$,s] avec ces différentes courbes théoriques, par exemple en calculant une distance L2 entre ces points et leurs correspondants sur les différentes courbes, de sorte à déterminer la courbe qui ressemble le plus aux mesures et calculs obtenus.

Dans le présent exemple, la courbe correspondant à l'état de piste "humide" s'apparente le plus aux couples [$\mu$,s] obtenus.

On obtient ainsi un état de piste pour l'intervalle considéré, lequel peut être corrélé avec une position spécifique sur la piste.

Cette comparaison est réitérée pour chaque intervalle de vitesses (les courbes théoriques pouvant être recalculées à cette occasion pour tenir compte des conditions opérationnelles et environnementales propres à cet intervalle), de sorte à obtenir un ensemble d'états de piste pour des positions correspondantes le long de la piste.

La **figure 8** illustre un deuxième mode de réalisation de cette détermination, basé sur la pente initiale "k" de la courbe $\mu$=f(s) (c'est-à-dire la pente pour la zone s<$s_{opt}$).

Ce deuxième mode de réalisation repose en effet sur le constat que cette pente initiale (généralement lors du freinage pour atterrissage le pilote reste dans la zone non limitée par l'adhérence) est fortement corrélée à l'état de la piste: plus cette pente est faible, plus la piste est glissante.

On détermine donc dans un premier temps, pour l'intervalle de vitesses considéré, les courbes théoriques sur la base du modèle précité puis les zones prises par leurs pentes initiales k. La figure représente ces zones dans l'espace k-$\mu$.

Il s'avère que cette pente initiale est également dépendante de la raideur mécanique des pneus (dépendante du type de pneu, de la température, de la texture du revêtement de piste et de la vitesse de l'avion). Ainsi pour améliorer la précision de la détection d'état de piste, il est prévue que ces zones prédéterminées sont définies à l'aide de l'au moins un profil prédéterminé (le modèle théorique), lequel est fonction de la valeur de raideur mécanique calculée.

Dans ce mode de réalisation, l'invention prévoit alors l'obtention d'une pluralité de valeurs de pente "k" du profil des couples [s,$\mu$] calculés à l'étape A4 pour une pluralité des valeurs d'adhérence p, de sorte à obtenir une pluralité de couples [k,$\mu$]. Les pentes k peuvent être obtenues par régression linéaire entre des couples successifs autour d'une valeur $\mu$ considérée.

Puis, l'invention comprend la détermination, parmi un ensemble de zones prédéterminées dans l'espace [k,$\mu$] et associées chacune à état de piste différent, d'une zone d'appartenance d'une majorité desdits couples [k,$\mu$].

Dans l'exemple de la figure, l'ensemble des pentes k pour l'intervalle courant se situe dans la zone correspondant à l'état de piste "neige tassée".

On obtient ainsi un état de piste pour l'intervalle considéré, lequel peut être corrélé avec une position spécifique sur la piste.

Cette approche est réitérée pour chaque intervalle de vitesses (les zones théoriques étant recalculées à cette occasion), de sorte à obtenir un ensemble d'états de piste pour des positions correspondantes le long de la piste.

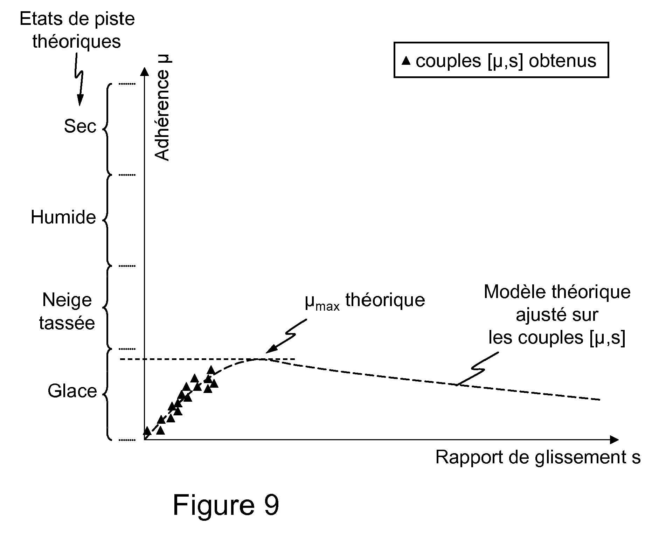

La **figure 9** illustre un troisième mode de réalisation de cette détermination basé sur l'ajustement du modèle théorique sur les couples [$\mu$,s] calculés à l'étape A4.

Ainsi, le profil ou modèle théorique prédéterminé est un profil paramétrique dont une partie des paramètres est fixée pour l'intervalle considéré (par exemple la température, la vitesse moyenne, la pression de contact, etc.), et la détermination d'un état de piste par comparaison comprend l'ajustement (ou *"fitting"* selon la terminologie anglo-saxonne) du profil paramétrique sur lesdits couples [s,$\mu$] et la détermination d'un état de piste à partir d'au moins une valeur caractéristique du profil ajusté.

Cette valeur caractéristique peut être de nature variée, par exemple un paramètre ajusté dudit profil paramétrique ($\mu_k$), une valeur d'adhérence maximale $\mu_{max}$ ou une valeur de pente initiale k. A titre d'illustration, on considère l'adhérence maximale $\mu_{max}$ comme valeur caractéristique sur la base de laquelle est réalisée la détermination de l'état de piste.

Cette valeur maximale est en effet directement liée à l'état de piste lorsque l'on tient compte des conditions physiques de l'avion, des pneus et de la piste (ce qui est le cas dans le modèle théorique précité).

Des techniques classiques d'ajustement de modèle paramétrique sont utilisées pour ajuster le modèle théorique ci-dessus aux couples [$\mu$,s] obtenus à l'étape A4. Les paramètres inconnus du modèle théorique (notamment $\mu_k$) sont alors obtenus

Une fois tous les paramètres connus, le maximum $\mu_{max}$ de la courbe de ce modèle ajusté est calculé puis comparé à des intervalles de valeurs correspondants chacun à des états théoriques différents de la piste, comme montré sur la figure (dans l'exemple, $\mu_{max}$ correspond à une piste glacée).

On obtient ainsi un état de piste pour l'intervalle considéré, lequel peut être corrélé avec une position spécifique sur la piste.

Cette approche est réitérée pour chaque intervalle de vitesses (certains paramètres du modèle théorique sont alors mis à jour, par exemple la vitesse moyenne, à cette occasion), de sorte à obtenir un ensemble d'états de piste pour des positions correspondantes le long de la piste.

Compte tenu du grand nombre d'états de piste qui peut être obtenu pour diverses positions le long de la piste dans ces trois modes de réalisation, on peut procéder à un regroupement de ces états de piste pour trois portions distinctes de ladite piste, par exemple le premier tiers de piste, la partie centrale, et le dernier tiers de piste. Ce regroupement peut consister à simplement conserver l'état de piste qui a le plus d'occurrences parmi les états de piste correspondant à des positions à l'intérieur de la portion de piste considérée.

Bien entendu les diverses méthodes des **figures 7 à 9** décrites précédemment peuvent être mises en oeuvre séparément, en combinaison ou constituer des moyens de vérification réciproque.

Comme décrit ci-dessus, l'invention permet ainsi d'estimer un état de piste en tenant compte du comportement opérationnel du système de freinage, des conditions physiques de la piste, de l'avion en phase de freinage et des caractéristiques statiques et dynamiques des pneus.

A la fin de la période de roulage sur la piste (à partir d'une certaine vitesse sol seuil par exemple), les données estimées sont alors enregistrées automatiquement à l'étape A6.

Puis à l'étape A7, on affiche, éventuellement sur action du pilote, sur l'écran du cockpit de l'avion 10, le résultat des estimations. Le pilote peut ainsi recevoir une ou plusieurs des informations suivantes :

- le niveau d'adhérence piste, en le liant, le cas échéant, à la portion de piste concernée ; et
- la caractérisation concise de l'état de piste rencontré.

Sur action du pilote validant tout ou partie des informations d'état de piste qui lui ont été proposées, celles-ci sont transmises, à l'étape A8, à l'extérieur de l'avion (centre de contrôle de l'aéroport ou avions en approche par exemple) accompagnées de la qualité des estimations trouvées.

La transmission des données peut-être effectuée par radio ou au travers d'un système tel que l'ACARS ("*Aircraft Communications Addressing and Reporting System*" selon la terminologie anglo-saxonne).

Dans l'exemple ci-dessus correspondant à l'avion Av2 de la **figure 2**, l'état de piste est clairement identifié sur une portion de piste (ici de 400 à 2000 m à partir du seuil.

L'information transmise peut alors se présenter de la façon suivante:

> *Aéroport XXX, Piste YYY, Avion ZZZ*
> *Date, Heure*
> *400 -2000m à partir du toucher*
> *Etat de piste identifié comme Eau (WATER) ¼".*

Les exemples qui précèdent ne sont que des modes de réalisation de l'invention qui ne s'y limite pas.

## Revendications

1. Procédé de détermination d'un état de piste d'atterrissage (12), comprenant les étapes suivantes:

   - acquisition (A1) de données de mesure relatives à au moins une grandeur physique d'un aéronef (10), pendant une phase de roulage de l'aéronef sur ladite piste;
   - obtention (A2), à l'aide des données acquises, d'une pluralité de valeurs estimées d'adhérence "µ" de la piste, correspondant à une pluralité respective d'instants de roulage de l'aéronef;
   - obtention (A3), à l'aide des données acquises, d'une valeur de rapport de glissement "s" d'au moins une roue de l'aéronef pour chaque dit instant de roulage, de sorte à obtenir (A4) une pluralité de couples [s,µ];
   - détermination d'un état de piste par comparaison (A5.2) du profil des couples [s,µ] avec au moins un profil prédéterminé.

2. Procédé selon la revendication 1, dans lequel la détermination d'un état de piste par comparaison comprend la sélection, parmi un ensemble de profils prédéterminés et associés chacun à état de piste différent, du profil prédéterminé le plus proche du profil des couples [s,µ].

3. Procédé selon la revendication 1, dans lequel la détermination d'un état de piste par comparaison comprend l'obtention d'une pluralité de valeurs de pente "k" du profil des couples [s,µ] pour une pluralité des valeurs d'adhérence µ, de sorte à obtenir une pluralité de couples [k,µ]; et la détermination, parmi un ensemble de zones prédéterminées dans l'espace [k,µ] et associées chacune à état de piste différent, d'une zone d'appartenance d'une majorité desdits couples [k,µ].

4. Procédé selon la revendication 3, dans lequel au moins une valeur de raideur mécanique relative au pneu de la roue de l'aéronef est calculée à l'aide de données de mesure acquises lors du roulage, et les zones prédéterminées sont définies à l'aide de l'au moins un profil prédéterminé, lequel est fonction de la valeur de raideur mécanique calculée.

5. Procédé selon la revendication 1, dans lequel le profil prédéterminé est un profil paramétrique, et la détermination d'un état de piste par comparaison comprend l'ajustement du profil paramétrique sur lesdits couples [s,µ] et la détermination d'un état de piste à partir d'au moins une valeur caractéristique du profil ajusté.

6. Procédé selon l'une des revendications 1 à 5, dans lequel ledit profil prédéterminé est de la forme $f(s, \mu_k, \mu_s, a, F_Z, c_p)$ où, aux instants de roulage correspondants, $\mu_k$ est un coefficient dynamique d'adhérence, $\mu_s$ est un coefficient statique d'adhérence, a est représentatif de la zone de contact entre le pneu de la roue de l'aéronef et la piste, $F_z$ est une charge verticale appliqué sur l'axe de la roue et $c_p$ est une valeur de raideur mécanique relative au pneu de la roue.

7. Procédé selon l'une des revendications 1 à 6, dans lequel une valeur de rapport de glissement "s" d'une roue de l'aéronef pour un instant de roulage est obtenue par calcul du rapport suivant: $\dfrac{V_x - V_c}{V_x}$ où $V_x$ est la vitesse au sol de l'aéronef à cet instant de roulage et $V_c$ est la vitesse linéaire de la roue au même instant de roulage.

8. Procédé selon l'une des revendications 1 à 7, dans lequel ladite détermination d'un état de piste par comparaison est itérée sur plusieurs jeux de couples [s,µ], les jeux correspondant à des phases de roulage distinctes.

9. Procédé selon la revendication 8, dans lequel différents états de piste déterminés sont associés à différentes portions de piste correspondant aux phases de roulage respectives.

10. Dispositif (14) de détermination d'un état de piste d'atterrissage (12), comprenant:

    - un module ($40_1$, $40_2$, $40_3$, $40_n$) d'acquisition de données de mesure relatives à au moins une grandeur physique d'un aéronef (10), pendant une phase de roulage de l'aéronef sur ladite piste;
    - un calculateur (42) pour obtenir, à l'aide des données acquises, une pluralité de valeurs estimées d'adhérence "µ" de la piste, correspondant à une pluralité respective d'instants de roulage de l'aéronef;
    - un calculateur (42) pour obtenir, à l'aide des données acquises, une valeur de rapport de glissement "s" d'au moins une roue de l'aéronef pour chaque dit instant de roulage, de sorte à obtenir une pluralité de couples [s,µ];
- un module (42) de détermination d'un état de piste par comparaison du profil des couples [s, µ] avec au moins un profil prédéterminé.

11. Dispositif selon la revendication 10, dans lequel le module de détermination est configuré pour sélectionner, parmi un ensemble de profils prédéterminés et associés chacun à état de piste différent, le profil prédéterminé le plus proche du profil des couples [s, µ].

12. Dispositif selon la revendication 10, dans lequel le module de détermination est configuré pour obtenir une pluralité de valeurs de pente "k" du profil des couples [s,µ] pour une pluralité des valeurs d'adhérence p, de sorte à obtenir une pluralité de couples [k,µ]; et pour déterminer, parmi un ensemble de zones prédéterminées dans l'espace [k,µ] et associées chacune à état de piste différent, une zone d'appartenance d'une majorité desdits couples [k,µ].

13. Dispositif selon la revendication 10, dans lequel le profil prédéterminé est un profil paramétrique, et le module de détermination est configuré pour ajuster le profil paramétrique sur lesdits couples [s,µ] et pour déterminer un état de piste à partir d'au moins une valeur caractéristique du profil ajusté.

14. Aéronef (10) comprenant au moins un dispositif de détermination d'un état de piste selon l'une des revendications 10 à 13.

15. Système d'assistance au pilotage d'aéronefs, notamment pour l'atterrissage de ceux-ci, comprenant au moins un dispositif (14) selon l'une des revendications 10 à 13 équipant au moins un aéronef (10), et une station au sol (18) apte à recevoir une information d'état de piste déterminé par ledit dispositif et apte à transmettre cette information d'état de piste à au moins un autre aéronef (22) en phase d'approche.

**Patentansprüche**

1. Verfahren zum Bestimmen eines Zustands einer Landebahn (12), das die folgenden Schritte umfasst:

   - Erfassen (A1) von Messdaten bezüglich wenigstens einer physikalischen Größe eines Flugzeugs (10) während einer Phase des Rollens des Flugzeugs auf der Bahn;
   - Erhalten (A2) mit Hilfe der erfassten Daten mehrerer geschätzter Reibungswerte "µ" der Bahn, die mehreren entsprechenden Zeitpunkten des Rollens des Flugzeugs entsprechen;
   - Erhalten (A3) mit Hilfe der erfassten Daten eines Gleitverhältniswerts "s" wenigstens eines Rades des Flugzeugs für jeden Rollzeitpunkt, derart, dass mehrere Paare [s, p] erhalten werden (A4);
   - Bestimmen eines Zustands der Bahn durch Vergleichen (A5.2) des Profils der Paare [s, p] mit wenigstens einem vorgegebenen Profil.

2. Verfahren nach Anspruch 1, wobei das Bestimmen eines Zustands der Bahn durch Vergleichen das Auswählen aus einer Gesamtheit von Profilen, die vorgegebenen und jeweils einem anderen Zustand der Bahn zugeordnet sind, jenes vorgegebenen Profils, das dem Profil der Paare [s, p] am nächsten kommt, umfasst.

3. Verfahren nach Anspruch 1, wobei das Bestimmen eines Zustands der Bahn durch Vergleichen umfasst: Erhalten mehrerer Steigungswerte "k" des Profils der Paare [s, p] für mehrere Reibungswerte p, derart, dass mehrere Paare [k, p] erhalten werden; und Bestimmen aus einer Gesamtheit von Zonen, die in dem Raum [k, p] vorgegeben sind und jeweils einem anderen Zustand zugeordnet sind, einer Zone, zu der eine Mehrzahl der Paare [k, p] gehört.

4. Verfahren nach Anspruch 3, wobei wenigstens ein Wert eines mechanischen Radius in Bezug auf den Reifen des Rades des Flugzeugs mit Hilfe der während des Rollens erfassten Messdaten berechnet wird und die vorgegebenen Zonen mit Hilfe des wenigstens einen vorgegebenen Profils, das eine Funktion des berechneten Wertes des mechanischen Radius ist, definiert werden.

5. Verfahren nach Anspruch 1, wobei das vorgegebene Profil ein parametrisches Profil ist und das Bestimmen eines Zustands der Bahn durch Vergleichen das Einstellen des parametrischen Profils auf die Paare [s, p] und das Bestimmen eines Zustands der Bahn anhand wenigstens eines charakteristischen Werts des eingestellten Profils umfasst.

6. Verfahren nach einem der Ansprüche 1 bis 5, wobei das vorgegebene Profil die Form $f(s,\ µ_k,\ µ_s,\ a,\ F_Z,\ c_p)$ hat, wobei zu den entsprechenden Rollzeitpunkten $µ_k$ ein dynamischer Reibungskoeffizient ist, $µ_s$ ein statischer Reibungskoeffizient ist, a die Kontaktzone zwischen dem Reifen des Rades des Flugzeugs und der Bahn repräsentiert, $F_Z$ eine vertikale Last ist, die auf die Achse des Rades ausgeübt wird, und $c_p$ ein Wert des mechanischen Radius in Bezug auf den Reifen des Rades ist.

7. Verfahren nach einem der Ansprüche 1 bis 6, wobei ein Gleitverhältniswert "s" eines Rades des Flugzeugs für einen Rollzeitpunkt durch Berechnen des folgenden Verhältnisses erhalten wird: $\dfrac{V_x - V_c}{V_x}$ , wobei $V_x$ die Geschwindigkeit auf dem Boden des Flugzeugs zu diesem Rollzeitpunkt ist und $V_c$ die lineare Geschwindigkeit des Rades zum selben Rollzeitpunkt ist.

8. Verfahren nach einem der Ansprüche 1 bis 7, wobei das Bestimmen eines Zustands der Bahn durch Vergleichen über mehrere Mengen von Paaren [s, p] iteriert wird, wobei die Mengen den verschiedenen Rollphasen entsprechen.

9. Verfahren nach Anspruch 8, wobei die verschiedenen bestimmten Zustände der Bahn verschiedenen Abschnitten der Bahn zugeordnet werden, die den jeweiligen Rollphasen entsprechen.

10. Vorrichtung (14) zum Bestimmen eines Zustands einer Landebahn (12), die Folgendes umfasst:

- ein Modul ($40_1$, $40_2$, $40_3$, $40_n$) zum Erfassen von Messdaten bezüglich wenigstens einer physikalischen Größe eines Flugzeugs (10) während einer Phase des Rollens des Flugzeugs auf der Bahn;
- einen Rechner (42), um mit Hilfe der erfassten Daten mehrere geschätzte Reibungswerte "μ" der Bahn, die mehreren entsprechenden Zeitpunkten des Rollens des Flugzeugs entsprechen, zu erhalten
- einen Rechner (42), um mit Hilfe der erfassten Daten einen Gleitverhältniswert "s" wenigstens eines Rades des Flugzeugs für jeden Rollzeitpunkt zu erhalten, derart, dass mehrere Paare [s, p] erhalten werden;
- ein Modul (42) zum Bestimmen eines Zustands der Bahn durch Vergleichen des Profils der Paare [s, p] mit wenigstens einem vorgegebenen Profil.

11. Vorrichtung nach Anspruch 10, wobei das Bestimmungsmodul konfiguriert ist, aus einer Gesamtheit von Profilen, die vorgegebenen sind und jeweils einem anderen Bahnzustand zugeordnet sind, jenes vorgegebene Profil auszuwählen, das dem Profil der Paare [s, p] am nächsten kommt.

12. Vorrichtung nach Anspruch 10, wobei das Bestimmungsmodul konfiguriert ist, mehrere Steigungswerte "k" des Profils der Paare [s, p] für mehrere Reibungswerte μ zu erhalten, derart, dass mehrere Paare [k, p] erhalten werden; und aus einer Gesamtheit von Zonen, die in dem Raum [k, p] vorgegebenen sind und jeweils einem anderen Bahnzustand zugeordnet sind, eine Zone, zu der eine Mehrzahl der Paare [k, p] gehört, zu bestimmen.

13. Vorrichtung nach Anspruch 10, wobei das vorgegebene Profil ein parametrisches Profil ist und das Bestimmungsmodul konfiguriert ist, das parametrische Profil auf die Paare [s, p] einzustellen und einen Bahnzustand wenigstens anhand eines charakteristischen Werts des eingestellten Profils zu bestimmen.

14. Flugzeug (10), das wenigstens eine Vorrichtung zum Bestimmen eines Bahnzustands nach einem der Ansprüche 10 bis 13 umfasst.

15. System für die Unterstützung der Steuerung von Flugzeugen, insbesondere für deren Landung, das wenigstens eine Vorrichtung (14) nach einem der Ansprüche 10 bis 13, mit der wenigstens ein Flugzeug (10) ausgestattet ist, und eine Bodenstation (18), die Informationen über den Zustand der Bahn empfangen kann, der durch die Vorrichtung bestimmt wird, und die diese Informationen über den Zustand der Bahn an wenigstens ein anderes Flugzeug (22) in der Anflugphase übertragen kann, umfasst.

**Claims**

1. Method for determining the condition of a landing runway (12), comprising the following steps:

- acquiring (A1) measurement data relating to at least one physical quantity for an aircraft (10), during a taxiing phase for the aircraft on said runway;
- obtaining (A2), using the acquired data, a plurality of estimated values of adhesion "μ" for the runway, corresponding to a respective plurality of taxiing instants for the aircraft;
- obtaining (A3), using the acquired data, a value of slip ratio "s" for at least one wheel of the aircraft for each said taxiing instant, so as to obtain (A4) a plurality of pairs [s, p];
- determining a runway condition by comparison (A5.2) of the profile of the pairs [s; p] with at least one predetermined profile.

2. Method according to Claim 1, in which the determination of a runway condition by comparison comprises selecting, among a set of predetermined profiles that are each associated with a different runway condition, the predetermined profile closest to the profile of the pairs [s, p].

3. Method according to Claim 1, in which the determination of a runway condition by comparison comprises obtaining a plurality of values of slope "k" for the profile of the pairs [s, p] for a plurality of the values of adhesion $\mu$, so as to obtain a plurality of pairs [k, p]; and determining, among a set of predetermined regions in space [k, p] that are each associated with a different runway condition, a region to which a majority of said pairs [k, p] belong.

4. Method according to Claim 3, in which at least one value of mechanical stiffness relating to the tyre of the wheel of the aircraft is computed using measurement data acquired during taxiing, and the predetermined regions are defined using the at least one predetermined profile, which is a function of the computed value of mechanical stiffness.

5. Method according to Claim 1, in which the predetermined profile is a parametric profile, and the determination of a runway condition by comparison comprises adjusting the parametric profile to said pairs [s, p] and determining a runway condition from at least one characteristic value for the adjusted profile.

6. Method according to one of Claims 1 to 5, in which said predetermined profile is of the form $f(s, \mu_k, \mu_s, a, F_z, c_p)$, where, at the corresponding taxiing instants, $\mu_k$ is a dynamic adhesion coefficient, $\mu_s$ is a static adhesion coefficient, a is representative of the contact region between the tyre of the wheel of the aircraft and the runway, $F_z$ is a vertical load applied to the axle of the wheel and $c_p$ is a value of mechanical stiffness relating to the tyre of the wheel.

7. Method according to one of Claims 1 to 6, in which a value of slip ratio "s" for a wheel of the aircraft for a taxiing instant is obtained by computing the following ratio: $\dfrac{V_x - V_c}{V_x}$ , where $V_x$ is the ground speed of the aircraft at this taxiing instant and $V_c$ is the linear speed of the wheel at the same taxiing instant.

8. Method according to one of Claims 1 to 7, in which said determination of a runway condition by comparison is iterated over several sets of pairs [s, p], the sets corresponding to distinct taxiing phases.

9. Method according to Claim 8, in which various determined runway conditions are associated with various portions of runway corresponding to the respective taxiing phases.

10. Device (14) for determining the condition of a landing runway (12), comprising:

    - a module ($40_1$, $40_2$, $40_3$, $40_n$) for acquiring measurement data relating to at least one physical quantity for an aircraft (10), during a taxiing phase for the aircraft on said runway;
    - a computer (42) for obtaining, using the acquired data, a plurality of estimated values of adhesion "$\mu$" for the runway, corresponding to a respective plurality of taxiing instants for the aircraft;
    - a computer (42) for obtaining (A3), using the acquired data, a value of slip ratio "s" for at least one wheel of the aircraft for each said taxiing instant, so as to obtain a plurality of pairs [s, p];
    - a module (42) for determining a runway condition by comparison of the profile of the pairs [s, p] with at least one predetermined profile.

11. Device according to Claim 10, in which the determination module is configured for selecting, among a set of predetermined profiles that are each associated with a different runway condition, the predetermined profile closest to the profile of the pairs [s, p].

12. Device according to Claim 10, in which the determination module is configured for obtaining a plurality of values of slope "k" for the profile of the pairs [s, p] for a plurality of the values of adhesion $\mu$, so as to obtain a plurality of pairs [k, p]; and for determining, among a set of predetermined regions in space [k, p] that are each associated with a different runway condition, a region to which a majority of said pairs [k, p] belong.

13. Device according to Claim 10, in which the predetermined profile is a parametric profile, and the determination module is configured for adjusting the parametric profile to said pairs [s, p] and for determining a runway condition from at least one characteristic value for the adjusted profile.

14. Aircraft (10) comprising at least one device for determining a runway condition according to one of Claims 10 to 13.

15. Aircraft piloting assistance system, notably for landing aircraft, comprising at least one device (14) according to one of Claims 10 to 13 equipping at least one aircraft (10), and one ground station (18) capable of receiving an item of runway condition information determined by said device and capable of transmitting this item of runway condition information to at least one other aircraft (22) in the approach phase.

Figure 1

Figure 2

**Av2 : Décélération sur état de piste « Eau ¼ de pouce » ( Water 1/4")**

**Vitesse au sol [ms$^{-1}$]**

**Accélération [ms$^{-1}$]**

## Figure 3

## Figure 4

Figure 5

Figure 6

Figure 7

Figure 8

Figure 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2897593
- US 2006243857 A
- FR 2930669
- US 20090292483 A
- WO 9614564 A